# EUROPEAN PATENT APPLICATION

(11) **EP 3 255 096 A1**
(43) Date of publication of application: **13.12.2017**
(21) Application number: 15881212.3
(22) Date of filing: 14.12.2015
(51) Int. Cl.: C08L 23/10, B32B 27/32

(54) **FILM FOR POLYOLEFIN-BASED COSMETIC SHEET**

(30) Priority: 03.02.2015 JP 2015019536
(71) Applicant: Diaplus Film Inc., Nagoya-shi, Aichi 453-0862 (JP)
(72) Inventor: KURATA, Masashi, Nagoya-shi Aichi 453-0862 (JP)
(74) Representative: Merkle, Gebhard
(86) International application number: PCT/JP2015/084901
(87) International publication number: WO 2016/125395

(57) **Abstract**

[Problem] To provide a film for a polyolefin decorative sheet having good embossability.

[Solution] A film for a polyolefin decorative sheet, having (A) an amount of heat of crystal fusion at 115 to 150°C of from 7 to 60 J/g and (B) an amount of heat of crystal fusion at 150 to 180°C of from 10 to 90 J/g.

## Description

### Technical Field

The present invention relates to a film for a polyolefin decorative sheet. Particularly, the present invention relates to a substrate film for a polyolefin decorative sheet, making stable printing and embossing possible in manufacturing a polyolefin decorative sheet, a decorative sheet using the same, and a decorative material for an architectural interior using the same.

### Background Art

As a decorative material such as decorative plywood used for furniture, an architectural interior material, or the like, a material obtained by sticking a decorative sheet which has been subjected to printing or coloring to a base material such as wood including plywood or a steel plate is well known. As a material of the decorative sheet, paper and a plastic film are widely used.

As a material of the plastic film for the decorative sheet, a vinyl chloride-based resin having an excellent design property and adhesiveness is often used. However, in recent years, a decorative sheet based on a polyolefin-based resin has been used due to a problem in a treatment of a hydrogen chloride gas generated during incineration after use or the like, selection of a furnace material of an incinerator used therefor, and the like. Among the decorative sheets, a decorative sheet based on a polypropylene-based resin film has a good balance between rigidity and flexibility. Therefore, a material of a polypropylene-based resin has been often used as a film for a decorative sheet.

As such a decorative sheet using a polypropylene-based resin, for example, Patent Literature 1 (JP H10-36590 A) and Patent Literature 2 (JP H11-172017 A) disclose a technique of a decorative sheet having high rigidity and hardly causing bending whitening.

On the other hand, a decorative sheet is often processed so as to have woodgrain vessel channel, relief pattern (uneven pattern of annual rings), hairline, sand grain, satin, or the like. It is widely known that embossing is performed in order to impart a desired texture thereto.

In use applications to be subjected to such embossing, the above conventional technique using a polypropylene-based resin has a problem that sufficient performance is not imparted in a step of embossing a decorative sheet. Specifically, when processing is performed at such a temperature that embossing is performed sufficiently, there is a problem that a film is broken during processing because the film cannot withstand the processing temperature. On the other hand, when processing is performed at such a temperature that the film is not broken during processing, there is a problem that embossing is performed insufficiently, and processability of a decorative sheet using an olefin resin film is insufficient.

### Citation List

### Patent Literature

Patent Literature 1: JP H10-36590 A
Patent Literature 2: JP H11-172017 A

### Summary of Invention

### Technical Problem

It is an object of the present invention to provide a film for a polyolefin decorative sheet having good embossability.

### Solution to Problem

The present inventor made intensive studies in view of the above problems, and has found that a polyolefin decorative sheet having excellent embossability can be obtained by adjusting a balance in the amount of heat of crystal fusion in a high temperature region and a low temperature region, and as a result, the present invention has been accomplished.

That is, the present invention provides:
[1] a film for a polyolefin decorative sheet, having (A) an amount of heat of crystal fusion at 115 to 150°C of from 7 to 60 J/g and (B) an amount of heat of crystal fusion at 150 to 180°C of from 10 to 90 J/g;
[2] the film for a polyolefin decorative sheet according to [1], wherein a ratio of (A) the amount of heat of crystal fusion to (B) the amount of heat of crystal fusion is 0.1 or more and 1 or less;
[3] the film for a polyolefin decorative sheet according to [1] or [2], wherein the film for a polyolefin decorative sheet comprises at least a polypropylene-based resin;
[4] the film for a polyolefin decorative sheet according to [3], wherein the polypropylene-based resin comprises a random copolymer of propylene and an α-olefin;
[5] a polyolefin decorative sheet comprising the film for a polyolefin decorative sheet according to any one of [1] to [4] as a substrate film; and
[6] a decorative material for an architectural interior, obtained by sticking a surface of the polyolefin decorative sheet according to [5] on a side of the substrate film to an adherend.

### Advantageous Effects of Invention

The present invention can provide a film for a polyolefin decorative sheet having good embossability.

### Description of Embodiments

One embodiment of the present invention is a film for a polyolefin decorative sheet characterized by having (A) an amount of heat of crystal fusion at 115 to 150°C of from 7 to 60 J/g and (B) an amount of heat of crystal fusion at 150 to 180°C of from 10 to 90 J/g.

In the present invention, it is important that (A) the amount of heat of crystal fusion of the film for a polyolefin decorative sheet at 115 to 150°C is from 7 to 60 J/g. The amount of heat of crystal fusion (A) is preferably from 7 to 50 J/g, more preferably from 8 to 40 J/g, and still more preferably from 10 to 30 J/g. By setting (A) the amount of heat of crystal fusion within the above range, stable embossability can be imparted in a step of embossing a film for a decorative sheet.

In addition, in the present invention, it is important that (B) the amount of heat of crystal fusion of the film for a polyolefin decorative sheet at 150 to 180°C is from 10 to 90 J/g. The amount of heat of crystal fusion (B) is preferably from 20 to 80 J/g, more preferably from 20 to 70 J/g, and still more preferably from 25 to 60 J/g. By setting (B) the amount of heat of crystal fusion within the above range, breakage of a film for a decorative sheet due to the embossing temperature can be suppressed, and stable embossability can be imparted in a step of embossing the film for a decorative sheet.

In addition, in the present invention, a value obtained by dividing (A) the amount of heat of crystal fusion by (B) the amount of heat of crystal fusion, that is, a ratio of (A) the amount of heat of crystal fusion to (B) the amount of heat of crystal fusion is preferably 0.1 or more and 1 or less, more preferably 0.1 or more and 0.9 or less, and still more preferably 0.2 or more and 0.8 or less. By setting the ratio of (A) the amount of heat of crystal fusion to (B) the amount of heat of crystal fusion within the above range, embossing can be performed more stably in a step of embossing a film for a decorative sheet, breakage of the film for a decorative sheet during embossing can be further suppressed, and more stable embossability can be imparted.

Note that the amount of heat of crystal fusion in the present invention means a value calculated from a crystal peak area on a DSC chart when the temperature is raised from 25°C to 230°C at a temperature rising rate of 2°C/min using a differential scanning calorimeter (DSC) for measurement in accordance with JIS K7122.

### <Polyolefin-based resin>

A polyolefin-based resin used in the present invention is not particularly limited as long as satisfying that (A) the amount of heat of crystal fusion at 115 to 150°C is from 7 to 60 J/g and (B) the amount of heat of crystal fusion at 150 to 180°C is from 10 to 90 J/g. Examples thereof include a polypropylene-based resin, a polyethylene-based resin, and a mixture thereof.

The film for a polyolefin decorative sheet according to the present invention preferably comprises at least a polypropylene-based resin.

### <Polypropylene-based resin>

Examples of the polypropylene-based resin include a propylene homopolymer, a propylene copolymer, and a mixture (polymer blend) of the homopolymer and/or the copolymer and another polymer. Examples of the copolymer include a random copolymer or a block copolymer of propylene and ethylene or another α-olefin, and a propylene graft copolymer containing a polyolefin-based copolymer as a trunk polymer.

An α-olefin copolymerizable with propylene preferably has 4 to 12 carbon atoms. Examples thereof include 1-butene, 1-pentene, 1-hexene, 1-heptene, 1-octene, 4-methyl-1-pentene, and 1-decene. One kind thereof or a mixture of two or more kinds thereof is used. A mixing ratio of an α-olefin is preferably from 1 to 10% by weight, and particularly preferably from 2 to 6% by weight relative to propylene.

Examples of a polyolefin-based copolymer for a trunk polymer of the propylene graft copolymer include an ethylene-propylene rubber, an ethylene-butene rubber, and an ethylene-propylene-diene rubber.

Examples of the polymer to be mixed with a propylene homopolymer and/or a propylene copolymer to generate a polymer blend include a diene-based rubber such as an isoprene rubber, a butadiene rubber, a butyl rubber, a propylene-butadiene rubber, an acrylonitrile-butadiene rubber, or an acrylonitrile-isoprene rubber, a polyolefin-based thermoplastic elastomer such as an ethylene-propylene copolymer rubber, an ethylene-propylene nonconjugated diene rubber, or an ethylene-butadiene copolymer rubber, and a styrene-based thermoplastic elastomer such as a styrene-butadiene-based elastomer or a styrene-isoprene-based elastomer.

Among these compounds, a random copolymer of propylene and an α-olefin is preferably used as a polyolefin-based resin used in the present invention. The film for a polyolefin decorative sheet according to the present invention comprises a random copolymer of propylene and an α-olefin in an amount preferably of 70% by mass or less, more preferably of 68% by mass or less relative to 100% by mass of an olefin-based resin. By using a random copolymer of propylene and an α-olefin, (A) the amount of heat of crystal fusion at 115 to 150°C can be easily within a range of 7 to 60 J/g, elution of a melted component can be suppressed during storage of the film for a polyolefin decorative sheet according to the present invention, and a printing property at the time of secondary processing can be excellent. In addition, elution of a melted component, deterioration, or the like can be suppressed even after use of the film for a polyolefin decorative sheet for a long time, and the film for a polyolefin decorative sheet can have a better stability.

In the film for a polyolefin decorative sheet according to the present invention, a mixture of a propylene homopolymer and a random copolymer of propylene and an α-olefin is particularly preferably used as a polyolefin resin. A weight ratio in the mixture of a propylene homopolymer to a random copolymer of propylene and an α-olefin is preferably from 10:90 to 60:40, more preferably from 20:80 to 55:45, and still more preferably from 22:78 to 50:50. By setting the weight ratio of a propylene homopolymer to a random copolymer of propylene and an α-olefin within the above range, (A) the amount of heat of crystal fusion at 115 to 150°C can be easily within a range of 7 to 60 J/g, and (B) the amount of heat of crystal fusion at 150 to 180°C can be easily within a range of 10 to 90 J/g. This makes it possible to obtain a combination of materials having good compatibility as an entire polyolefin-based resin, and the resin can have more stable performance for a long time.

A melt flow rate of a polypropylene-based resin used for the film for a polyolefin decorative sheet according to the present invention is preferably from 0.1 to 30 (g/10 min) under conditions of 230°C and 2.16 kgf. A melt flow rate of 0.1 or more makes molding easy, and makes it easy to obtain a smooth film. In addition, a melt flow rate of 30 or less prevents the melt viscosity from becoming too low, and does not make molding into a film difficult.

### <Polyethylene-based resin>

Examples of the polyethylene-based resin include an ethylene homopolymer and/or a copolymer of ethylene and another monomer copolymerizable with ethylene, mainly containing ethylene (low density polyethylene (LDPE), linear low density polyethylene (LLDPE), high density polyethylene (HDPE), polyethylene obtained by polymerization using a metallocene catalyst, or the like), and a mixture of the homopolymer and/or the copolymer and another copolymer (polymer blend). Examples of the polymer to be mixed with a homopolymer and/or a copolymer to generate a polymer blend include a diene-based rubber such as an isoprene rubber, a butadiene rubber, a butyl rubber, a propylene-butadiene rubber, an acrylonitrile-butadiene rubber, or an acrylonitrile-isoprene rubber, a polyolefin-based thermoplastic elastomer such as an ethylene-propylene nonconjugated diene rubber or an ethylene-butadiene copolymer rubber, and a styrene-based thermoplastic elastomer such as a styrene-butadiene-based elastomer or a styrene-isoprene-based elastomer.

A melt flow rate of a polyethylene-based resin used for the film for a polyolefin decorative sheet according to the present invention is preferably from 0.1 to 30 (g/10 min) under conditions of 190°C and 2.16 kgf. A melt flow rate of 0.1 or more makes molding easy, and makes it easy to obtain a smooth film. In addition, a melt flow rate of 30 or less prevents the melt viscosity from becoming too low, and does not make molding into a film difficult.

The film for a polyolefin decorative sheet according to the present invention may comprise a polyolefin-based resin not having such a characteristic that (A) the amount of heat of crystal fusion at 115 to 150°C is from 7 to 60 J/g and (B) the amount of heat of crystal fusion at 150 to 180°C is from 10 to 90 J/g as long as the film has (A) the amount of heat of crystal fusion at 115 to 150°C and (B) the amount of heat of crystal fusion at 150 to 180°C within the ranges specified in the present invention.

In one aspect of the present invention, a film for a polyolefin decorative sheet comprises a polyolefin-based resin in which (A) the amount of heat of crystal fusion at 115 to 150°C is from 7 to 60 J/g and (B) the amount of heat of crystal fusion at 150 to 180°C is from 10 to 90 J/g alone.

In another aspect of the present invention, a film for a polyolefin decorative sheet comprises a mixture of polyolefin-based resins in which (A) the amount of heat of crystal fusion at 115 to 150°C is from 7 to 60 J/g and (B) the amount of heat of crystal fusion at 150 to 180°C is from 10 to 90 J/g. Each of polyolefin-based resins in the mixture may have the above characteristic of the amount of heat of crystal fusion, but it is necessary for the entire mixture to have the above characteristic of the amount of heat of crystal fusion.

The film for a polyolefin decorative sheet according to the present invention can be obtained, for example, by using a polyolefin-based resin having the amount of heat of crystal fusion in a temperature range of 115 to 150°C alone or mixing a plurality of resins such that (A) the amount of heat of crystal fusion in a temperature range of 115 to 150°C is from 7 to 60 J/g, by using a polyolefin-based resin having the amount of heat of crystal fusion in a temperature range of 150 to 180°C alone or mixing a plurality of resins such that (B) the amount of heat of crystal fusion in a temperature range of 150 to 180°C is from 10 to 90 J/g, and by further mixing these polyolefin-based resins.

The film for a polyolefin decorative sheet according to the present invention may be a single layer or a multilayer. For example, in a case of a multilayer, a two-layer formed of a surface layer and a substrate layer or a three-layer structure having at least a surface layer, an intermediate layer, and a back layer may be used. A layer formed of a polyolefin resin may be further present between the surface layer and the intermediate layer or between the back layer and the intermediate layer. In addition, an adhesive layer may be present between the surface layer and the intermediate layer or between the back layer and the intermediate layer.

When the film for a polyolefin decorative sheet according to the present invention is constituted by three or more layers, a ratio of the thickness of an intermediate layer relative to the thickness of the entire film is preferably from 70% to 99.9%, and more preferably from 75% to 95%.

When the film for a polyolefin decorative sheet according to the present invention comprises a pigment and is constituted by a plurality of layers, the content of the pigment in an intermediate layer can be larger than that in a surface layer or a back layer, or the pigment can be contained only in the intermediate layer. As described above, by forming a lamination structure in which the content of the pigment in the intermediate layer of the film is large and the addition amount of the pigment in the surface layer or the back layer is as small as possible or zero, generation of gum or the like can be dominantly prevented during manufacturing the film even when the amount of the pigment is increased.

An organic pigment or an inorganic pigment may be used as the pigment. Examples thereof include titanium oxide, carbon black, iron oxide, an azo-based compound, a phthalocyanine-based compound, and a titanium oxide-antimony oxide-nickel oxide solid solution. The content of the pigment depends on a masking property required as a decorative sheet, but is preferably from 1 to 60 parts by weight relative to 100 parts by weight of a polyolefin-based resin.

An ultraviolet absorber and/or a hindered amine-based light stabilizer are/is preferably blended into the film for a polyolefin decorative sheet according to the present invention.

The blending amount of the ultraviolet absorber is preferably from 0.01 to 10 parts by weight, and particularly preferably from 0.05 to 5 parts by weight relative to 100 parts by weight of a polyolefin resin in each layer. The blending amount of 0.01 parts by weight or more easily obtains an effect of preventing browning or deterioration. The blending amount of 10 parts by weight or less obtains an effect corresponding to the blending amount, and does not cause bleeding.

Examples of the ultraviolet absorber used for the film for a polyolefin decorative sheet according to the present invention include a benzotriazole-based ultraviolet absorber such as
2-[2'-hydroxy-3'-(3",4",5",6"-tetrahydrophthalimidemethyl)-5'-methylphenyl] benzotriazole (molecular weight 388), 2-[2-hydroxy-3,5-bis(a,a-dimethylbenzyl) phenyl]-2H-benzotriazole (molecular weight 448), or 2,2-methylenebis[4-(1,1,3,3-tetramethylbutyl-6-(2H-benzotri azol-2-yl) phenol] (molecular weight 659), and a benzophenone-based ultraviolet absorber such as 2,4-dihydroxybenzophenone, 2-hydroxy-4-methoxybenzophenone, 2-hydroxy-4-octoxybenzophenone, 2,2'-dihydroxy-4-dimethoxy benzophenone, or bis(2-methoxy-4-hydroxy-5-benzoylphenyl) methane.

Among the above ultraviolet absorbers, a benzotriazole-based ultraviolet absorber is preferably used in order to reduce coloring of a product. Furthermore, a benzotriazole-based ultraviolet absorber having a molecular weight of 380 to 1000 is preferable, and a benzotriazole-based ultraviolet absorber having a molecular weight of 400 to 800 is more preferable. By setting the molecular weight within the above range, a blooming prevention effect is larger.

The blending amount of the hindered amine-based light stabilizer is preferably from 0.01 to 10 parts by weight relative to 100 parts by weight of a polyolefin-based resin in each layer. The blending amount of 0.01 parts by weight or more easily obtains a stabilizing effect. The blending amount of 10 parts by weight or less obtains an effect corresponding to the blending amount, and does not cause blooming.

Examples of the hindered amine-based light stabilizer include bis(2,2,6,6-tetramethyl-4-piperidyl) sebacate, bis(1,2,2,6,6-pentamethyl-4-piperidyl) 2-(3,5-di-t-butyl-4-hydroxybenzyl)-2-n-butylmalonate, a succinic acid dimethyl-1-(2-hydroxyethyl)-4-hydroxy-2,2,6,6-tetramethylpi peridine polycondensate, poly[{6-(1,1,3,3-tetramethylbutyl)amino-1,3,5-triazine-2,4-diyl} {(2,2,6,6-tetramethyl-4-piperidyl)imino}hexamethylene {(2,2,6,6-tetramethyl-4-piperidyl)imino}], and other hindered amine-based light stabilizers.

Another synthetic resin or an optional additive such as an antioxidant, a slip agent, a colorant, a filler, or a nucleating agent may be further added to the film for a polyolefin decorative sheet according to the present invention within a range not impairing the object of the present invention. In general, these additives are used in a form of a product obtained by blending these additives to a resin at a high concentration in advance (masterbatch).

As a method for manufacturing the film for a polyolefin decorative sheet, it is possible to use a general method for molding a polyolefin-based resin film such as a T-die extrusion molding method, an inflation molding method, or a calender molding method without any particular limitation.

The thickness of the film for a polyolefin decorative sheet according to the present invention is preferably less than 200 µm, and more preferably 150 µm or less. In the present invention, even in a case where the thickness of the film is within such a range, a film for a decorative sheet having excellent embossability and printing processability can be formed.

Note that the thickness of the film for a polyolefin decorative sheet is an average value obtained by measuring the thickness of a film using a dial gauge with a scale of 0.001 mm in accordance with JIS B 7503, and refers to an arithmetic average value obtained by performing measurement at locations and the number of samples generally considered in a case of measuring the thickness of a film.

Another embodiment of the present invention is a decorative sheet comprising the above film for a polyolefin decorative sheet as a substrate film.

Examples of such a decorative sheet include a sheet obtained by forming a printing layer on the front layer side of the above film for a polyolefin decorative sheet and laminating a transparent surface layer thereon. Specifically, the decorative sheet according to the present invention can be manufactured by subjecting one surface or both surfaces of the film for a polyolefin decorative sheet according to the present invention to a corona treatment, applying a primer mainly containing a chlorinated polyolefin-based resin or the like thereon, performing woodgrain printing on the treated sheet by gravure printing, sticking a transparent sheet thereto, and subjecting the resulting sheet to embossing.

In general, a surface layer is often provided on the surface of a decorative sheet in order to improve weather resistance, wear resistance, scratch resistance, and the like of a decorative material. This layer is formed by laminating or coating of a polyolefin-based resin, a polyester-based resin, an acrylic-based resin, a urethane-based resin, or the like. This surface layer may be subjected to embossing.

The printing layer can be formed by performing printing such as gravure printing, offset printing, offset gravure printing, or silk-screen printing using an ink in which a pigment or the like is dispersed, or a transfer method. In order to improve adhesion between the printing layer and a substrate sheet for a decorative material, a substrate sheet surface for a decorative material to be subjected to printing is desirably subjected to a corona treatment in advance. In addition, a primer layer is preferably provided between the substrate sheet and the printing layer because adhesion therebetween is further improved. Examples of the primer layer include a layer formed by applying a solution mainly containing a chlorinated polyolefin resin, a polyester resin, an ethylene-vinyl alcohol copolymer, or the like, and optionally containing a filler on a substrate film of a film for a polyolefin decorative sheet.

Still another embodiment of the present invention is a decorative material for an architectural interior obtained by sticking a back surface of the substrate film of the above polyolefin decorative sheet to an adherend.

By using the polyolefin decorative sheet having a substrate film in a layer structure according to the present invention, a better sticking property to the decorative material for an interior is obtained, and a decorative material for an architectural interior, having such excellent long-term performance that the polyolefin decorative sheet is hardly peeled off even after use thereof for a long time, can be manufactured.

### Examples

Hereinafter, the present invention will be described in detail based on Examples. However, the present invention is not limited by the following Examples as long as not departing from the abstract thereof.

### <Materials used>

- polypropylene-based resin A-1: "F327BV" (random PP) manufactured by Prime Polymer Co., Ltd.
- polypropylene-based resin A-2: "FLX80E4" (homo PP) manufactured by Sumitomo Chemical Co., Ltd.
- polypropylene-based resin A-3: "Novatec BC3HF" (block PP) manufactured by Japan Polypropylene Corporation
- polyethylene-based resin B-1: "LC500"manufactured by Japan Polyethylene Corporation
- polyethylene-based resin B-2: "SP0540" manufactured by Prime Polymer Co., Ltd.
- olefin-based elastomer C-1: "F3900" manufactured by Prime Polymer Co., Ltd.

### <Examples 1 to 4 and Comparative Examples 1 to 6>

### Preparation of film for polyolefin decorative sheet

Using the formulations shown in Table 1, a resin was extruded at a die temperature of 230°C with one extruder of 50 mmφ and two T-die extruders (T-die: width 650 mm) of 35 mmφ. The extruded resin was subjected to nip molding with a metal molding roll and a rubber molding roll through which cooling water passed to prepare a film for a decorative sheet having a thickness of 60 µm.

The resulting film was evaluated as follows. Table 1 shows results thereof.

### 1) Measurement of the amount of heat of crystal fusion

An area in each temperature range specified in Table 1 was calculated from a crystalline peak area on a DSC chart measured when the temperature of about 5 mg of a sample of a film for a decorative sheet obtained from a polyolefin-based resin (or a mixture in a case where two or more polyolefin-based resins are mixed) shown in Table 1 was raised from 25°C to 230°C at a temperature rising rate of 2°C/min using a differential scanning calorimeter (DSC823e manufactured by Mettler-Toledo Inc.).

### 2) Embossability

The resulting film for a decorative sheet was heated and softened using an infrared non-contact type heater, and then was pressurized with an embossing plate having irregularities and shaped. Embossability was evaluated according to the following criteria.
○: A film is not broken but can be uniformly embossed.
×: A film is broken or cannot be embossed uniformly.

**[Table 1]**

| | unit | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| polypropylene-base d resin (A-1) | % by mass | 65 | 45 | 50 | 60 | 100 | | 10 | | | |
| polypropylene-base d resin (A-2) | | 20 | 45 | 50 | 10 | | 100 | 80 | 90 | | |
| polypropylene-base d resin (A-3) | | | | | 30 | | | | | 100 | |
| polyethylene-based resin (B-1) | | | 5 | | | | | 5 | 5 | | 100 |
| polyethylene-based resin (B-2) | | | 5 | | | | | 5 | 5 | | |
| olefin-based elastomer (C-1) | | 15 | | | | | | | | | |
| (A) amount of heat of crystal fusion (115°C to 150°C) | J/g | 20.9 | 10.6 | 14.7 | 16.7 | 40.9 | 3.3 | 6.4 | 6.9 | 2.4 | 2.0 |
| (B) amount of heat of crystal fusion (150°C to 180°C) | J/g | 44.7 | 46.4 | 48.5 | 33.6 | 4.3 | 91 | 58.3 | 54.5 | 74.2 | 5.4 |
| (A) amount of heat of crystal fusion / (B) amount of heat of crystal fusion | - | 0.47 | 0.23 | 0.30 | 0.50 | 9.51 | 0.04 | 0.11 | 0.13 | 0.03 | 0.37 |
| embossability | - | ○ | ○ | ○ | ○ | × | × | × | × | × | × |

Table 1 indicates that the films for a polyolefin decorative sheet in Examples 1 to 4 have the amount of heat of crystal fusion specified in the present invention, and have excellent embossability. Particularly, the film in Example 1 has very good embossability and easy processability.

On the other hand, the films for a polyolefin decorative sheet in Comparative Examples 2 to 6 have the small amount of heat of crystal fusion at 115°C to 150°C. Therefore, it is difficult to impart embossing stably thereto, and embossability is poor. The film in Comparative Example 1 has the small amount of heat of crystal fusion at 150°C to 180°C. Therefore, the strength of the film for a polyolefin decorative sheet is unstable according to the temperature for embossing, and performance for stable processing is poor.

These results indicate that the film for a polyolefin decorative sheet according to the present invention has very good embossability.

## Claims

1. A film for a polyolefin decorative sheet, having (A) an amount of heat of crystal fusion at 115 to 150°C of from 7 to 60 J/g, and (B) an amount of heat of crystal fusion at 150 to 180°C of from 10 to 90 J/g.

2. The film for a polyolefin decorative sheet according to claim 1, wherein a ratio of (A) the amount of heat of crystal fusion to (B) the amount of heat of crystal fusion (B) is 0.1 or more and 1 or less.

3. The film for a polyolefin decorative sheet according to claim 1 or 2, wherein the film for a polyolefin decorative sheet comprises at least a polypropylene-based resin.

4. The film for a polyolefin decorative sheet according to claim 3, wherein the polypropylene-based resin comprises a random copolymer of propylene and an α-olefin.

5. A polyolefin decorative sheet comprising the film for a polyolefin decorative sheet according to any one of claims 1 to 4 as a substrate film.

6. A decorative material for an architectural interior, obtained by sticking a surface of the polyolefin decorative sheet according to claim 5 on a side of the substrate film to an adherend.
